# EUROPÄISCHE PATENTSCHRIFT

(11) **EP 1 531 100 B1**
(45) Veröffentlichungstag und Bekanntmachung des Hinweises auf die Patenterteilung: **18.04.2007**
(21) Anmeldenummer: 04025997.0
(22) Anmeldetag: 03.11.2004
(51) Int. Cl.: B60T 7/10, B60T 7/04, B60T 13/66

(54) **Bedienungseinrichtung einer elektrischen Parkbremse eines Fahrzeugs**
Electric parking brake actuator for vehicle
Dispositif de commande pour frein de stationnement électrique d'un véhicule

(30) Priorität: 13.11.2003 DE 10353056
(43) Veröffentlichungstag der Anmeldung: 18.05.2005
(73) Patentinhaber: KNORR-BREMSE SYSTEME FÜR NUTZFAHRZEUGE GMBH, 80809 München (DE)
(72) Erfinder: Fonseca, Braulio, 85391 Allershausen (DE); Herges, Michael, 70825 Korntal-Münchingen (DE)
(74) Vertreter: Schönmann, Kurt

(56) Entgegenhaltungen:
- EP-A- 0 706 922
- DE-A1- 2 452 299
- DE-A1- 10 153 038
- DE-A1- 10 157 462
- DE-A1- 19 548 560
- DE-A1- 19 825 642
- DE-A1- 19 935 420
- DE-A1- 19 962 556
- US-A- 6 131 450

## Beschreibung

### Stand der Technik

Die Erfindung betrifft eine elektrische Parkbremse eines Fahrzeugs, insbesondere eines Nutzfahrzeugs, umfassend eine Bedieneinrichtung zur Betätigung elektrischer Stelleinrichtungen wie elektrischer Schalter, die ein Zuspannen und/oder Lösen der Parkbremse auslösen, gemäß dem Oberbegriff von Anspruch 1.

Gattungsgemäße Parkbremsen sind aus der DE 199 62 556 A 1 oder aus der DE 10 1 53 038 A 1 bekannt. Sie beinhalten jeweils ein einziges manuell betätigbares Bedienelement mit zwei Betätigungsrichtungen, wobei das Bedienelement in seiner ersten Betätigungsrichtung durch Zug (Zuspannen der Parkbremse) und in seiner zweiten Betätigungsrichtung durch Druck (Lösen der Parkbremse) betätigbar ist. Durch versehentliche Betätigung des Bedienelements, beispielsweise durch versehentliches Anstoßen kann die Parkbremse jedoch unbeabsichtigt gelöst werden. In der DE 101 57 462 A1 wird eine mechanisch-elektrische Parkbremse beschrieben, bei welcher das Lösen der Bremse mittels einer Betätigung eines einzigen Bedienelements ausgelöst wird.

Die DE 199 35 420 A1 beschreibt eine mechanische Feststellbremseinrichtung mit einem die Feststellbremse über einen Bowdenzug betätigenden Handbremshebel, an welchem mechanisch oder elektronisch auslösbare Schalteinrichtungen angeordnet sind.

Der vorliegenden Erfindung liegt demgegenüber die Aufgabe zugrunde, eine elektrische Parkbremse der eingangs erwähnten Art derart weiterzubilden, dass sie eine höhere Bedien- und Funktionssicherheit aufweist.

Erfindungsgemäß wird diese Aufgabe durch die kennzeichnenden Merkmale von Anspruch 1 gelöst.

### Vorteile der Erfindung

Indem die Bedieneinrichtung wenigstens zwei manuell betätigbare Bedienelemente beinhaltet, wobei von den wenigstens zwei manuellen Bedienelementen ein Bedienelement zum Zuspannen der Parkbremse vorgesehen ist und zum Lösen der Parkbremse wenigstens zwei Bedienelemente nacheinander oder gleichzeitig betätigt werden müssen, wird ausgeschlossen, dass durch eine versehentliche Betätigung nur eines der Bedienelemente die Parkbremse unbeabsichtigt gelöst wird. Diese Maßnahme erhöht die Bediensicherheit der Parkbremse.

Indem weiterhin jedem Bedienelement wenigstens zwei redundante elektrische Stelleinrichtungen zugeordnet sind, wobei eine solche elektrische Stelleinrichtung beispielsweise einen elektrischen Schalter mit zwei Schaltstellungen beinhaltet, durch welchen das Lösen oder das Zuspannen der Parkbremse gesteuert wird, wird die Ausfallsicherheit bzw. die Verfügbarkeit der Parkbremse erhöht.

Durch die in den Unteransprüchen aufgeführten Maßnahmen sind vorteilhafte Weiterbildungen und Verbesserungen der im Patentanspruch 1 angegebenen Erfindung möglich.

Besonders bevorzugt müssen zum Lösen der Parkbremse das Bedienelement zum Zuspannen der Parkbremse und ein Bedienelement zum Lösen der Parkbremse nacheinander oder gleichzeitig betätigt werden. Dabei unterscheidet sich das Bedienelement zum Zuspannen der Bremse durch optisch und/oder haptisch erfassbare Merkmale von dem Bedienelement zum Lösen der Parkbremse. Solche optisch und/oder haptisch erfassbaren Merkmale können beispielsweise in einer anderen Größe bzw. hervorstehenden Länge, einer anderen Formgestaltung und/oder in einer anderen Farbgebung bestehen. Vorzugsweise ist das Bedienelement zum Zuspannen der Bremse größer ausgebildet als das Bedienelement zum Lösen der Parkbrems. Diese Maßnahmen tragen dazu bei, Verwechslungen von unterschiedliche Funktionen auslösenden Bedienelementen zu vermeiden.

Gemäß einer weiteren Maßnahme sind wenigstens einige der Bedienelemente derart ausgebildet, dass sie nach Entfernen der Betätigungskraft automatisch in ihre Ausgangslage zurückkehren. Dies ist vor allem dann von Vorteil, wenn die Parkbremse zusätzlich zur manuellen Bedienung durch elektrische Signale von Steuereinrichtungen automatisch ansteuerbar ist. Eine solche Steuereinrichtung kann beispielsweise ein Gaspedal oder ein Kupplungspedal beinhalten, so dass immer dann, wenn das Gaspedal oder das Kupplungspedal vom Fahrer des Fahrzeugs betätigt wird, die sich im zugespannten Zustand befindliche Parkbremse durch ein entsprechendes elektrisches Lösesignal gelöst wird.

Entsprechend könnte bei Abziehen des Zündschlüssels ein elektrisches Zuspannsignal zum automatischen Zuspannen der Parkbremse erzeugt werden. Wenn dann bei einer solchen wahlweisen, durch elektrische Signale ausgelösten automatischen Betätigung oder bei einer durch den Fahrer bewirkten manuellen Betätigung der Parkbremse die Bedienelemente nach einer manuellen Betätigung stets in ihre Ausgangslage zurückkehren, brauchen keine Aktoren vorgesehen werden, welche die Betätigungselemente in die dem jeweiligen, durch elektrische Signale hervorgerufenen Zustand der Parkbremse entsprechende Stellung stellen. Die Bedienelemente können dann beispielsweise durch in die Ausgangslage vorgespannte Bedienknöpfe oder Hebel gebildet werden.

Alternativ kann der Grad des Lösens oder des Zuspannens der Parkbremse vom Grad und/oder der Reihenfolge der Betätigung der Bedienelemente abhängig sein. Dann sind zumindest einige der Stelleinrichtungen graduell betätigbar ausgebildet und beinhalten analoge Sensoren zum Sensieren des Betätigungsweges der Stelleinrichtungen wie beispielsweise Hall-Sensoren, Potentiometer etc.. Die jeweils redundant vorhandenen Stelleinrichtungen steigern die Zuverlässigkeit der Parkbremse bzw. sie ermöglichen eine gegenseitige Überwachung der Stelleinrichtungen untereinander.

Um dem Fahrer ein Gefühl für den Betätigungsweg bzw. für den Grad der Betätigung zu vermitteln, sind die Bedienelemente beispielsweise derart ausgebildet sind, dass ihr Betätigungswiderstand mit dem Grad der Betätigung ansteigt.

Das Bedienelement zum Zuspannen der Bremse stellt vorzugsweise gleichzeitig ein Bedienelement zum Aktivieren einer Testfunktion dar, welche das Lösen der Betriebsbremse eines Anhängerfahrzeugs einer Zugfahrzeug-Anhängerfahrzeug-Kombination und das Zuspannen der Parkbremse des Zugfahrzeugs beinhaltet, um feststellen zu können, ob die Parkbremse des Zugfahrzeugs alleine die Zugfahrzeug-Anhängerfahrzeug-Kombination eingebremst halten kann. Zum Aktivieren dieser Testfunktion wird das Bedienelement zum Zuspannen der Bremse über einen bestimmten Zeitraum oder mit einem bestimmten Betätigungsweg betätigt. Im ersten Fall wird die Testfunktion daher zeitgesteuert ausgelöst, beispielsweise durch Halten des Bedienelements zum Zuspannen der Parkbremse in voll betätigter Stellung über einen bestimmten Zeitraum. Im zweiten Fall erfolgt das Auslösen der Testfunktion weggesteuert, beispielsweise dadurch, dass das Bedienelement zum Zuspannen der Bremse bis zu einem bestimmten Grad oder bis zu seinem Endanschlag betätigt wird. Dann kann zum Aktivieren der Testfunktion eine eigene Stelleinrichtung in Form eines Schalters vorgesehen sein, welcher beispielsweise erst umgeschaltet wird, wenn das Bedienelement zum Zuspannen der Parkbremse bis zu seinem Endanschlag betätigt wird. Auch sind Kombinationen aus Zeit- und Wegsteuerung möglich.

### Zeichnungen

Ausführungsbeispiele der Erfindung sind in den Zeichnungen dargestellt und in der nachfolgenden Beschreibung näher erläutert. Es zeigen :
- Fig.1: eine stark schematisierte Schnittdarstellung einer bevorzugten Ausführungsform einer Betätigungseinrichtung einer elektrischen Parkbremse gemäß der Erfindung;
- Fig.2: eine stark schematisierte Schnittdarstellung einer weiteren Ausführungsform der Betätigungseinrichtung.

### Beschreibung der Ausführungsbeispiele

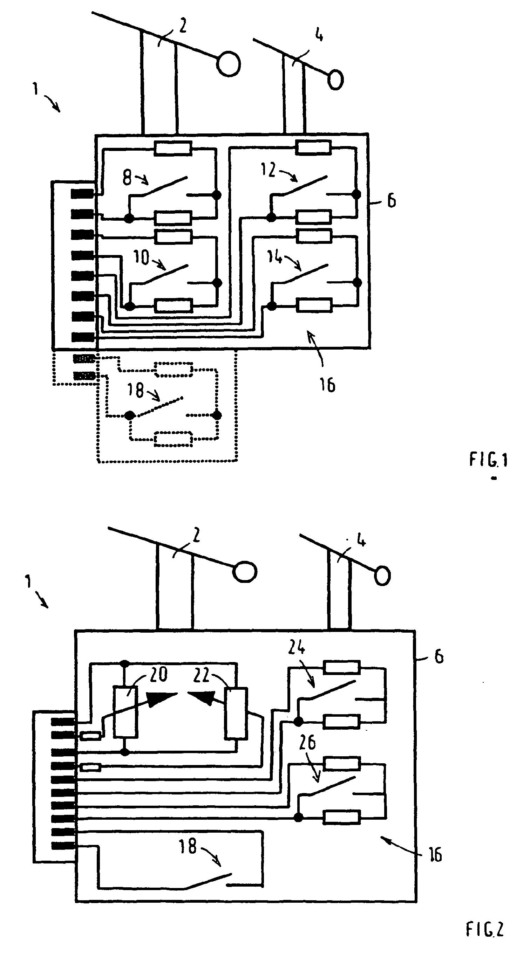

Fig.1 zeigt eine bevorzugte Ausführungsform einer Betätigungseinrichtung 1 einer elektrischen Parkbremse eines Nutzfahrzeugs. Die Parkbremse ist beispielsweise eine passive Federspeicherbremse, d.h. durch Entlüften eines Bremszylinders spannt die Speicherfeder die Parkbremse zu, durch Belüften wird sie wieder gelöst.

Die Betätigungseinrichtung 1 beinhaltet wenigstens zwei Betätigungselemente, insbesondere genau zwei Betätigungselemente in Form von zwei in ihre Ausgangslage vorgespannte Bedienknöpfe 2, 4, von welchen der in Fig.1 linke Bedienknopf 2 zum Zuspannen der Parkbremse und der rechte Bedienknopf 4 zum Lösen der Parkbremse vorgesehen ist. Die Bedienknöpfe 2, 4 sind in einem Gehäuse 6 vertikal verschieblich geführt und beispielsweise durch aus Übersichtlichkeitsgründen in Fig.1 nicht dargestellte Federn in eine Ausgangslage vorgespannt, in welcher sie maximal aus dem Kopfteil des Gehäuses 6 der Betätigungseinrichtung 1 herausragen, wobei eine darüber hinausgehende Ausfahrbewegung durch entsprechende Anschläge verhindert wird. Die beiden Bedienknöpfe 2, 4 haben keinen Halte- oder Rastmechanismus und sind folglich nicht ohne dauernd aufgewandte Betätigungskraft in einer niedergedrückten Stellung haltbar.

Die Bedienknöpfe 2, 4 können mit ihrem in das Gehäuse 6 hineinragenden Fußteil jeweils zwei elektrische Schalter 8, 10 und 12, 14 gleichzeitig betätigen, d.h. jeder Bedienknopf 2, 4 betätigt zwei Schalter 8, 10 bzw. 12, 14. Die elektrischen Schalter 8, 10 bzw. 12, 14 sind in eine elektrische Schaltung 16 derart eingebunden und in Bezug auf die von Ihnen gesteuerte Funktion derart redundant vorhanden, dass bei Ausfall eines der beiden Schalter 8, 10 bzw. 12, 14 der noch funktionsfähige andere Schalter 8, 10 bzw. 12, 14 die entsprechende Funktion auslösen kann, im vorliegenden Fall nämlich das Zuspannen oder das Lösen der Parkbremse. Das Vorhandensein der Schalter 8, 10 und 12, 14 im Sinne einer Funktionsredundanz erhöht die Verfügbarkeit der Parkbremse und trägt folglich zur Steigerung der Sicherheit bei. Darüber hinaus ist auch eine gegenseitige Überwachung der redundanten Schalter 8, 10 und 12, 14 möglich, in dem Sinne, dass bei einem Ausfall eines Schalters 8, 10 bzw. 12, 14 der andere Schalter 8, 10 bzw. 12, 14 ein Fehlersignal auslöst, welches beispielsweise über eine optische Anzeige dem Fahrer angezeigt werden kann.

Besonders bevorzugt unterscheidet sich der Zuspann-Bedienknopf 2 durch optisch und/oder haptisch erfassbare Merkmale vom Löse-Bedienknopf 4, insbesondere dadurch, dass der Zuspann-Bedienknopf 2 größer ausgebildet ist als der Löse-Bedienknopf 4. Darüber hinaus können noch weitere oder andere optisch und/oder haptisch erfassbare Merkmale eine schnelle Unterscheidung der Bedienknöpfe 2, 4 ermöglichen, beispielsweise eine unterschiedliche hervorstehende Länge, eine andere Formgestaltung oder eine andere Farbgebung. Diese Maßnahmen tragen dazu bei, Verwechslungen der Bedienknöpfe 2, 4 zu vermeiden.

Der Zuspann-Bedienknopf 2 dient nicht nur zum Auslösen der Zuspann-Funktion. Vielmehr wirken der Zuspann-Bedienknopf 2 und der Löse-Bedienknopf 4 auf die Schalter 8, 10 und 12, 14 bzw. die elektrische Schaltung 16 derart, dass zum Lösen der Parkbremse beide Bedienknöpfe 2, 4 gleichzeitig oder nacheinander betätigt werden müssen. Für eine gleichzeitige Betätigung ist die in Fig.1 sichtbare enge Nachbarschaft und parallele Lage bzw. parallele Betätigungsrichtung der beiden Bedienknöpfe 2, 4 günstig. Durch die Forderung, zum Lösen der Parkbremse beide Bedienknöpfe 2, 4 betätigen zu müssen, wird ausgeschlossen, dass durch eine versehentliche Betätigung des Löse-Bedienknopfes 4 die Parkbremse unbeabsichtigt gelöst wird. Vorzugsweise wird die Parkbremse durch eine Betätigung der beiden Bedienknöpfe 2, 4 über ihren vollen Betätigungsweg gelöst.

Der Zuspann-Bedienknopf 2 stellt vorzugsweise gleichzeitig ein Betätigungselement zum Aktivieren einer Testfunktion dar, welche das Lösen der Betriebsbremse eines Anhängerfahrzeugs einer Zugfahrzeug-Anhängerfahrzeug-Kombination und das Zuspannen der Parkbremse des Zugfahrzeugs beinhaltet, um feststellen zu können, ob die Parkbremse des Zugfahrzeugs alleine die Zugfahrzeug-Anhängerfahrzeug-Kombination eingebremst halten kann. Zum Aktivieren dieser Testfunktion wird der Zuspann-Bedienknopf 2 über einen bestimmten Zeitraum oder mit einem bestimmten Betätigungsweg betätigt. Im ersten Fall wird die Testfunktion daher zeitgesteuert ausgelöst, beispielsweise durch Halten des Zuspann-Bedienknopfes 2 in voll betätigter Stellung über einen bestimmten Zeitraum. Im zweiten Fall erfolgt das Auslösen der Testfunktion weggesteuert, beispielsweise dadurch, dass der Zuspann-Bedienknopf 2 bis zu einem bestimmten Grad oder bis zu seinem Endanschlag betätigt wird. Vorzugsweise ist zum Aktivieren der Testfunktion ein eigener Schalter 18 vorgesehen, welcher beispielsweise erst umgeschaltet wird, wenn der Zuspann-Bedienknopf 2 seinen Endanschlag erreicht hat.

Anstatt die Parkbremse entweder vollständig zu Lösen oder vollständig Zuzuspannen, kann der Grad des Lösens oder des Zuspannens der Parkbremse vom Grad der Betätigung der Bedienknöpfe 2, 4 abhängig sein. Durch die Federvorspannung steigt der Betätigungswiderstand der Bedienknöpfe 2, 4 mit dem Grad ihrer Betätigung, was vom Fahrer als eine zur Betätigungskraft proportionale Rückstellkraft wahrgenommen wird. Eine solche Ausführung ist in Fig.2 dargestellt. Der Zuspann-Bedienknopf 2 betätigt beispielsweise zwei redundant geschaltete Potentiometer 20, 22, welche abhängig vom Betätigungsgrad des Zuspann-Bedienknopfes 2 ein entsprechendes elektrisches Signal erzeugen. Anstatt der Potentiometer 20, 22 sind auch kontaktlose Sensoren denkbar, beispielsweise Hall-Sensoren, mit denen der jeweilige Betätigungsgrad des Zuspann-Bedienkopfes 2 erfassbar und in eine entsprechendes elektrisches Signal wandelbar ist.

Wenn die Parkbremse beispielsweise nur halb zugespannt werden soll, muß hierzu der Zuspann-Bedienknopf 2 in eine Halbbremsstellung gebracht, d.h. in Bezug zu einer Vollbremsstellung etwa nur halb soviel betätigt werden. Zum Lösen der Parkbremse aus der Halbbremsstellung werden dann zunächst beide Bedienknöpfe 2, 4 gleichzeitig betätigt. Nach einer kurzen Zeitdauer des gemeinsamen Niederdrückens wird der Löse-Bedienknopf 4 zuerst losgelassen, damit er bedingt durch die Federvorspannung in seine Ausgangslage zurückkehren kann. Dies löst dann über zwei vom Löse-Bedienknopf betätigte redundante Schalter 24, 26 und die elektrische Schaltung 16 das elektrische Signal zum Lösen der Parkbremse aus. Genauso ist denkbar, die Parkbremse durch Niederdrücken des Zuspann-Bedienknopfes 2 in eine Vollbremsstellung vollständig zuzuspannen. Der Lösevorgang läuft dann genauso ab wie oben beschrieben.

Weiterhin kann der Zuspann-Bedienknopf 2 über die Vollbremsstellung hinaus in eine Teststellung überdrückt werden, in der die oben beschriebene Testfunktion auslösende Schalter 18 umgeschaltet wird. Vorzugsweise muß dann der Zuspann-Bedienknopf 2 bis zum Ende des Tests in der Teststellung gehalten werden. Der Ablauf der Testfunktion kann dem Fahrer durch entsprechende Signalmittel angezeigt werden, beispielsweise durch das Aufleuchten einer Lampe am Armaturenbrett.

Anstatt durch Niederdrücken könnten die Signale zum Zuspannen und Lösen der Parkbremse auch durch Herausziehen der Betätigungselemente ausgelöst werden, welche dann entsprechend ausgestaltet sind. Als Betätigungselemente denkbar sind auch schwenkbare Hebel, die in eine Ausgangslage vorgespannt sind. In Umsetzung des Erfindungsgedankens könnte das Lösen der Parkbremse dann durch gleichzeitiges Betätigen zweier Hebel in Gang gesetzt werden.

### Bezugszahlenliste

- 1: Betätigungseinrichtung
- 2: Bedienknopf
- 4: Bedienknopf
- 6: Gehäuse
- 8: Schalter
- 10: Schalter
- 12: Schalter
- 14: Schalter
- 16: Elektr. Schaltung
- 18: Schalter
- 20: Potentiometer
- 22: Potentiometer

## Patentansprüche

1. Elektrische Parkbremse eines Fahrzeugs, insbesondere eines Nutzfahrzeugs, umfassend eine Bedieneinrichtung (1) zur Betätigung elektrischer Stelleinrichtungen wie elektrischer Schalter (8, 10, 12, 14), die ein Zuspannen und/oder Lösen der Parkbremse auslösen, **dadurch gekennzeichnet, dass** die Bedieneinrichtung (1) wenigstens zwei manuell betätigbare Bedienelemente (2, 4) beinhaltet, wobei
- jedes Bedienelement wenigstens zwei redundante elektrische Stelleinrichtungen (8, 10 bzw. 12, 14) betätigt, und wobei
- von den wenigstens zwei manuellen Bedienelementen (2, 4) ein Bedienelement (2) zum Zuspannen der Parkbremse vorgesehen ist und zum Lösen der Parkbremse wenigstens zwei Bedienelemente (2, 4) nacheinander oder gleichzeitig betätigt werden müssen.

2. Elektrische Parkbremse nach Anspruch 1, **dadurch gekennzeichnet, dass** zum Lösen der Parkbremse das Bedienelement (2) zum Zuspannen der Parkbremse und ein Bedienelement (4) zum Lösen der Parkbremse nacheinander oder gleichzeitig betätigt werden müssen.

3. Elektrische Parkbremse nach Anspruch 2, **dadurch gekennzeichnet, dass** sich das Bedienelement (2) zum Zuspannen der Parkbremse durch optisch und/oder haptisch erfassbare Merkmale von dem Bedienelement (4) zum Lösen der Parkbremse unterscheidet.

4. Elektrische Parkbremse nach wenigstens einem der vorhergehenden Ansprüche, **dadurch gekennzeichnet, dass** wenigstens einige der Bedienelemente (2, 4) derart ausgebildet sind, dass sie nach Entfernen der Betätigungskraft automatisch in ihre Ausgangslage zurückkehren.

5. Elektrische Parkbremse nach wenigstens einem der vorhergehenden Ansprüche, **dadurch gekennzeichnet, dass** die Bedienelemente durch in die Ausgangslage vorgespannte Bedienknöpfe (2, 4) oder Hebel gebildet werden.

6. Elektrische Parkbremse nach Anspruch 5, **dadurch gekennzeichnet, dass** der Grad des Lösens oder des Zuspannens der Parkbremse vom Grad der Betätigung der Bedienelemente (2, 4) abhängig ist, wobei zumindest einige der elektrischen Stelleinrichtungen als Potentiometer (20, 22) ausgebildet sind.

7. Elektrische Parkbremse nach wenigstens einem der vorhergehenden Ansprüche, **dadurch gekennzeichnet, dass** die Bedienelemente (2, 4) derart ausgebildet sind, dass ihr Betätigungswiderstand mit dem Grad der Betätigung ansteigt.

8. Elektrische Parkbremse nach wenigstens einem der vorhergehenden Ansprüche, **dadurch gekennzeichnet, dass** das Bedienelement (2) zum Zuspannen der Bremse gleichzeitig ein Bedienelement zum Aktivieren einer Testfunktion darstellt, welche das Lösen der Betriebsbremse eines Anhängerfahrzeugs einer Zugfahrzeug-Anhängerfahrzeug-Kombination und das Zuspannen der Parkbremse des Zugfahrzeugs der Zugfahrzeug-Anhängerfahrzeug-Kombination beinhaltet.

9. Elektrische Parkbremse nach Anspruch 8, **dadurch gekennzeichnet, dass** zum Aktivieren der Testfunktion das Bedienelement (2) zum Zuspannen der Bremse über einen bestimmten Zeitraum oder mit einem bestimmten Betätigungsweg betätigbar ist.

10. Elektrische Parkbremse nach Anspruch 9, **dadurch gekennzeichnet, dass** zum Aktivieren der Testfunktion eine eigene, vom Bedienelement (2) zum Zuspannen der Bremse betätigbare elektrische Stelleinrichtung (18) vorgesehen ist.

## Claims

1. Electric parking brake of a vehicle, in particular of a commercial vehicle, comprising an operating means (1) for operating electric control means such as electric switches (8, 10, 12, 14) triggering the application and/or release of the parking brake, **characterised in that** said operating means (1) comprise at least two operating elements (2, 4) for manual control, wherein
- each operating element controls at least two redundant electric control means (8, 10 or 12, 14, respectively), and wherein
- one operating element (2) of said at least two manually controllable operating elements (2, 4) is provided for application of the parking brake and at least two operating elements (2, 4) must be operated one after the other or at the same time for release of the parking brake.

2. Electric parking brake according to Claim 1,
**characterised in that** for release of the parking brake said operating element (2) for application of the parking brake and one operating element (4) for release of the parking brake must be operated one after the other or at the same time.

3. Electric parking brake according to Claim 2,
**characterised in that** said operating element (2) for application of the parking brake is distinguished from said operating element (4) for release of the parking brake by optically and/or haptically detectable features.

4. Electric parking brake according to at least one of the preceding Claims,
**characterised in that** at least some of said operating elements (2, 4) are so configured that they return automatically into their initial position after the operating force has been removed.

5. Electric parking brake according to at least one of the preceding Claims,
**characterised in that** said operating elements are formed by control knobs (2, 4) or levers biased into their initial position.

6. Electric parking brake according to Claim 5,
**characterised in that** the degree of release or application of the parking brake depends on the degree of operation of said operating elements (2, 4), with at least some of said electric control means being configured as potentiometer (20, 22).

7. Electric parking brake according to at least one of the preceding Claims,
**characterised in that** said operating elements (2, 4) are so configured that their resistance to operation increases as the degree of operation increases.

8. Electric parking brake according to at least one of the preceding Claims,
**characterised in that** said operating element (2) for application of the brake is an operating element for activation of a test function at the same time, which involves the release of the service brake of a trailer vehicle of a tractor/trailer combination and the application of the parking brake of the tractor vehicle of the tractor/trailer combination.

9. Electric parking brake according to Claim 8,
**characterised in that** for activation of the test function, said operating element (2) for application of the brake is adapted to be operated through a defined period of time or over a defined operating distance.

10. Electric parking brake according to Claim 9,
**characterised in that** for activation of the test function, a separate electric actuator means (18) is provided which is operable by said operating element (2) for application of the brake.

## Revendications

1. Frein de stationnement électrique d'un véhicule, en particulier d'un véhicule utilitaire,
comprenant un moyen de commande (1) à commander des moyens électriques d'actionnement, comme des commutateurs électriques (8, 10, 12, 14), qui déclenchant l'actionnement et/ou le desserrage du frein de stationnement, **caractérisé en ce que** ledit moyen de commande (1) comprend deux éléments actionneurs (2, 4) à commande manuelle, dans lequel
- chaque élément actionneur commande au moins deux moyens électriques d'actionnement (8, 10 ou respectivement 12, 14) redondants, et dans lequel
- un élément actionneur (2) desdits au moins deux éléments actionneurs (2, 4) à commande manuelle est disposé pour l'actionnement du frein de stationnement et au moins deux éléments actionneurs (2, 4) doivent être actionné l'un après l'autre ou en même temps pour le desserrage du frein de stationnement.

2. Frein de stationnement électrique selon la revendication 1,
**caractérisé en ce que** pour le desserrage du frein de stationnement, ledit élément actionneur (2) pour l'actionnement du frein de stationnement et un élément actionneur (4) pour le desserrage du frein de stationnement doivent être actionné l'un après l'autre ou en même temps.

3. Frein de stationnement électrique selon la revendication 2,
**caractérisé en ce que** ledit élément actionneur (2) pour l'actionnement du frein de stationnement se distingue dudit élément actionneur (4) pour le desserrage du frein de stationnement par des caractéristique détectables de manière optique et/ou haptique.

4. Frein de stationnement électrique selon au moins une quelconque des revendications, **caractérisé en ce qu'**au moins quelques-uns desdits éléments actionneurs (2, 4) sont configurés d'une telle manière, qu'ils retournent, de façon automatique, en leur position de départ après la fin de l'effort de commande.

5. Frein de stationnement électrique selon au moins une quelconque des revendications,
**caractérisé en ce que** lesdits éléments actionneurs sont constitués par des boutons de commande (2, 4) ou des leviers mis en précontrainte en leur position de départ.

6. Frein de stationnement électrique selon la revendication 5,
**caractérisé en ce que** le degré de desserrage ou d'actionnement du frein de stationnement fait fonction du degré de commande desdits éléments actionneurs (2, 4), à au moins quelques-uns desdits moyens électrique d'actionnement étant configurés sous forme d'un potentiomètre (20, 22).

7. Frein de stationnement électrique selon au moins une quelconque des revendications,
**caractérisé en ce que** lesdits éléments actionneurs (2, 4) sont configurés d'une telle manière, que leur résistance à l'actionnement s'augmente le plus, le plus s'augmente le degré d'actionnement.

8. Frein de stationnement électrique selon au moins une quelconque des revendications,
**caractérisé en ce que** ledit élément actionneur (2) pour l'actionnement du frein est un élément actionneur pour l'activation d'une fonction de test au même temps, qui englobe le desserrage le frein de service du véhicule tracteur d'une combinaison véhicule tracteur/remorque et l'actionnement du frein de stationnement du véhicule tracteur de la combinaison véhicule tracteur/remorque.

9. Frein de stationnement électrique selon la revendication 8,
**caractérisé en ce que** pour l'activation de la fonction de test, ledit élément actionneur (2) pour l'actionnement du frein est apte à être commandé pour une période définie ou sur une distance de commande définie.

10. Frein de stationnement électrique selon la revendication 9,
**caractérisé en ce que** pour l'activation de la fonction de test, un moyen actionneur séparé (18) est monté, qui est commandable moyennant ledit élément actionneur (2) pour l'actionnement du frein.
